Europäisches Patentamt

European Patent Office

Office européen des brevets

(19)

(11) Veröffentlichungsnummer: **0 217 081**
**B1**

(12) **EUROPÄISCHE PATENTSCHRIFT**

(45) Veröffentlichungstag der Patentschrift:
**11.01.89**

(21) Anmeldenummer: **86111154.0**

(22) Anmeldetag: **12.08.86**

(51) Int. Cl.⁴: **C25D 9/02,** C25D 1/04,
C25D 1/18, C25D 13/08,
H01B 1/12

(54) **Verfahren zum Aufbringen einer Schicht aus einem elektrisch leitfähigen Werkstoff auf einen anderen elektrisch leitfähigen Werkstoff.**

(30) Priorität: **23.08.85 DE 3530102**
**13.02.86 DE 3604490**

(43) Veröffentlichungstag der Anmeldung:
**08.04.87 Patentblatt 87/15**

(45) Bekanntmachung des Hinweises auf die Patenterteilung:
**11.01.89 Patentblatt 89/2**

(84) Benannte Vertragsstaaten:
**BE DE FR GB NL**

(56) Entgegenhaltungen:
**EP-A- 0 132 709**
**DE-A- 2 235 002**
**DE-A- 2 428 628**
**DE-A- 2 712 730**
**DE-A- 3 226 278**
**DE-A- 3 241 452**
**GB-A- 2 124 256**
**US-A- 4 488 943**

(73) Patentinhaber: **BASF Aktiengesellschaft,
Carl-Bosch-Strasse 38, D-6700 Ludwigshafen(DE)**

(72) Erfinder: **Naarmann, Herbert, Dr., Haardtblick 15,
D-6719 Wattenheim(DE)**
Erfinder: **De Beuckelaer, Gerard,, In der Ortsflur 9,
D-6719 Weisenheim(DE)**

## Beschreibung

Die Erfindung betrifft ein Verfahren zum Aufbringen einer Schicht aus einem elektrisch leitfähigen Werkstoff auf die Oberfläche eines anderen elektrisch leitfähigen Werkstoffs, bei dem man eine Lösung aufbringt, aus der durch elektrochemische Abscheidung ein anderer elektrisch leitfähiger Werkstoff entsteht, die Lösung auf die Oberfläche des anderen Werkstoffs aufbringt und den elektrisch leitfähigen Werkstoff auf der Oberfläche des anderen Werkstoffs abscheidet.

Nach den bekannten Verfahren der Galvanotechnik z.B. der Galvanostegie (Elektroplattierung) werden aus Elektrolytlösungen, die Metallsalze enthalten Überzüge auf Gegenständen kathodisch abgeschieden. So kann man z.B. Metallüberzüge auf die Oberflächen anderer Metalle oder des gleichen Metalls aufbringen. Es ist aber auch möglich, Metallüberzüge auf nicht leitende Werkstoffe, deren Oberfläche leitend ausgerüstet ist, abzuscheiden. Derartige Verfahren werden z.B. in Römpps "Chemie-Lexikon" Frank'sche Verlagshandlung Stuttgart, unter den Stichworten Galvanotechnik und Galvanostegie, beschrieben. Eine sehr ausführliche Darstellung der bekannten Methoden der Galvanotechnik findet sich in Ullmanns Encyklopädie der technischen Chemie, 4. Auflage, Band 12, Seite 137 bis Seite 200.

Die elektrochemische Abscheidung von elektrisch leitfähigen Polypyrrol auf Metallen ist bekannt (vgl. u.a. US-PS 3 574 072 und DE-A 3 049 551). Hierbei werden Pyrrol bzw. die Pyrrol-/Comonomer-Mischungen in einem in aller Regel organischen Elektrolyt-Lösungsmittel in Gegenwart von Leitsalzen elektrolysiert, wobei sich durch anodische Oxidation die Pyrrol-Polymeren bilden und an der Anode abscheiden. Die Leitsalze, beispielsweise die Alkalimetall-, Ammonium- oder Phosphonium-Salze mit Anionen aus der Gruppe $BF_4^-$, $AsF_6^-$, $SbF_6^-$, $PF_6^-$, $SbCl_6^-$, $ClO_4^-$, $HSO_4^-$ oder $SO_4^{2-}$, werden hierbei zumindest teilweise in die Pyrrol-Polymeren – wahrscheinlich in komplex gebundener Fcrm – eingelagert und verleihen den so hergestellten Pyrrol-Polymeren eine hohe elektrische Leitfähigkeit bis zu etwa $10^2$ Ohm$^{-1}$cm$^{-1}$.

Nach einem älteren Vorschlag der Patentanmeldung P 35 08 266.6 kann man eine besonders intensive Bindung zwischen Metall und leitfähigen Polymeren dadurch erreichen, daß man die Oberfläche des Metalls mit Metallkomplexbildnern behandelt und dann eine Lösung, die ein anodisch oxidierbares Monomeres und ein Leitsalz enthält, mit einer Kathode verbindet, die Metalloberfläche als Anode schaltet und das Monomere auf dieser Oberfläche polymerisiert. Hierdurch ist es z.B. möglich, Verbundstoffe aus leitfähigem Polymeren und unedlen Metallen, z.B. Aluminium, herzustellen, wie man sie als Elektroden in elektrischen Speicherelementen benötigt.

Aufgabenstellung der Erfindung ist ein Verfahren zum Aufbringen einer Schicht eines elektrisch leitenden Werkstoffs durch elektrochemische Abscheidung auf einem anderen elektrisch leitfähigen Werkstoff.

Die Aufgabe der Erfindung wird durch ein Verfahren gelöst, bei dem man einen Behälter, der mit einer Öffnung versehen ist und eine Elektrode und eine Lösung enthält, aus der durch elektrochemische Abscheidung ein elektrisch leitfähiger Werkstoff entsteht, über die Oberfläche des anderen elektrisch leitfähigen Werkstoffes führt, so daß die Lösung im Bereich der Öffnung des Behälters mit der Oberfläche des anderen elektrisch leitfähigen Werkstoffes in Kontakt kommt, den anderen Werkstoff mit der Gegenelektrode verbindet und elektrisch leitfähigen Werkstoff aus der Lösung elektrochemisch auf der Oberfläche des anderen Werkstoffes abscheidet.

Das Verfahren der Erfindung gestattet es, z.B. eine Metallschicht auf die Oberflächen des elektrisch leitfähigen Werkstoffes nur an den Stellen aufzubringen, die mit der Öffnung des Behälters der die Anode sowie eine Metallsalzlösung enthält, in Berührung kommt. Durch Formgebung der Öffnung kann man Schichten in beliebiger Breite auf die gewünschten Stellen der Oberfläche des Werkstoffes aufbringen. Durch entsprechende Führung des die Anode enthaltenden Behälters über die Oberfläche können beliebige Muster der Beschichtung auf den gewünschten Stellen, z.B. in Form von Schriftzügen, auf die Werkstoffoberfläche aufgebracht werden.

Das Verfahren der Erfindung gestattet es aber auch, eine elektrisch leitfähige Schicht eines Polymeren auf die Oberflächen eines Metalls nur an den Stellen aufzubringen, die mit der Öffnung des Behälters der die Kathode sowie eine Lösung von Monomeren enthält, in Berührung kommt. Das Metall ist als Anode geschaltet, so daß das Monomere elektrochemisch polymerisiert wird und sich auf der Metalloberfläche abscheidet. Auch hierbei kann durch entsprechende Führung des die Kathode enthaltenden Behälters über die Metalloberfläche können beliebige Muster der Beschichtung auf den gewünschten Stellen, z.B. in Form von Schriftzügen, auf die Metalloberfläche aufgebracht werden.

Zur Ausübung des Verfahrens verwendet man einen Behälter, der mit einer Öffnung versehen ist und in dem eine Elektrode eingebaut ist. Der Behälter enthält außerdem eine Lösung aus der durch elektrochemische Abscheidung eine Schicht des elektrisch leitfähigen Werkstoffs auf dem anderen Werkstoff entsteht. Der Behälter wird so angeordnet, daß die Öffnung über die Oberfläche des anderen Werkstoffs geführt wird. Es wird dabei ein Abstand von Oberfläche zur Öffnung gewählt, der es erlaubt, daß die Lösung die Oberfläche benetzt, d.h. also mit der Oberfläche in Kontakt kommt. Es kann zweckmäßig sein, in der Öffnung einen offenzelligen Schaumstoff oder einen Vliesstoff anzuordnen, der als Schreibdocht wirkt, so daß die Lösung gleichmäßig auf der Oberfläche des anderen Werkstoffs beim Transport des Vlieses über die Oberfläche benetzt. Zum Aufbringen von Schriftzügen auf Oberflächen kann z.B. der Behälter in Form eines Schreibstiftes ausgebildet sein, so daß sich durch entsprechende Führung des Stiftes über die Oberfläche Schriftzüge ausbilden lassen.

Die Werkstoffe, auf denen die eine Schicht eines elektrisch leitenden Werkstoffes aufgebracht wird, können metallisch oder nichtmetallisch sein, vorausgesetzt, daß sie elektrisch leitfähig sind. Das Verfahren eignet sich insbesondere für das Aufbringen von Metallschichten auf andere metallische Werkstoffe, wie sie üblicherweise in der Technik Verwendung finden, z.B. Stahl, Nickel, Nickellegierungen, Aluminium, Duraluminium, Titan, Magnesium.

Die nichtmetallischen Werkstoffe, die elektrisch leitfähig ausgerüstet sind, können z.B. Kunststoffe sein, denen zur Bewirkung der Leitfähigkeit Metallpulver oder Ruß zugesetzt sind. Es ist aber auch möglich, die Oberfläche der Kunststoffe nach den Methoden der Galvanoplastik leitfähig auszurüsten. Als nichtmetallische Werkstoffe kommen außerdem sogenannte leitfähige Kunststoffe wie Polypyrrol, Polyacetylen oder Polyphenylen in Frage. Außerdem eignen sich metallische Folien, die z.B. durch Bedampfen mit Metall leitfähig gemacht wurden.

Nach einer besonderen Ausführung des Verfahrens kann man Schichten von leitfähigen Polymeren auf die Oberflächen von Metallen aufbringen. Bei diesen Verfahren enthält der Behälter eine Kathode und eine Lösung eines durch anodische Polymerisation polymerisierbaren Monomeren sowie eines Leitsalzes. Die Oberfläche des Metalls ist als Anode geschaltet.

Als Monomeren, die das elektrisch leitfähige Polymere bilden, werden solche Verbindungen verwendet, die anodisch oxidiert werden können. Man kann also beispielsweise Alkine oder Anilin als Monomere verwenden, so daß sich Polyalkine bzw. Polyanilin als Schicht auf der Metalloberfläche bildet. Die Monomeren können ausgewählt sein aus der Klasse der fünfgliedrigen heterocyclischen Verbindungen, die Stickstoff oder Schwefel als Heteroatom und außerdem ein π-Elektronensystem konjugierter Verbindungen enthalten. Beispiele dieser Verbindungen sind solche aus der Klasse der Pyrrole und der Thiophene. Von den Pyrrolen eignen sich z.B. das unsubstituierte Pyrrol selbst aber auch N-substituierte Pyrrole wie N-Alkylpyrrol. Es können aber auch andere substituierte Pyrrole wie 3,4-Dialkylpyrrole oder 3,4-Dichlorpyrrole Verwendung finden. Von den Verbindungen der Klasse der Thiophene eignet sich insbesondere das unsubstituierte Thiophen selbst sowie 2- oder 3-Alkylthiophene, z.B. 2,3-Diethylthiophene. Diese genannten fünfgliedrigen heterocyclischen Verbindungen können aber auch zusammen mit anderen copolymerisierbaren Verbindungen, wie z.B. Furanen, Thiazol, Oxazol oder Imidazol oder Anilin und Derivaten, polymerisiert werden. Bevorzugt als Monomere sind jedoch Pyrrol oder Thiophen.

Die Polymerisation dieser Monomeren erfolgt in Gegenwart von Leitsalzen, die auch als Komplexierungsmittel oder Dotierungsmittel bezeichnet werden. Als Leitsalze haben sich z.B. $KHSO_4$, $Na_2SO_4$, HCOOH, $LiClO_4$, $HClO_4$, $NEt_4ClO_4$, $NBu_4ClO_4$, $KAlF_3$, $NaAlF_6$, $KBF_4$, $K_2ZrF_6$, $K_2NiF_4$, $HO_2(NO_3)_2$, $H_2SO_4$, $FeCl_3$, $NOPF_6$, $KAsF_6$ oder $NaPF_6$ bewährt. Die Konzentration der Leitsalze ist so bemessen, daß auf 3 Mol des eingesetzten Monomeren oder der Gemische der Monomeren mindestens 1 Mol der oben aufgeführten Leitsalze verwendet werden. Sulfonsäuren des Pyrrols oder des Thiophens können sowohl als Monomere als auch als Leitsalze verwendet werden. Geeignet sind auch Anionen von Aromaten mit sauren Gruppen, z.B. substituierte aromatische Sulfonsäuren oder Polysulfonsäuren. Die Leitsalzkonzentration ist bei dem Verfahren im allgemeinen zwischen 0,001 bis 1, vorzugsweise 0,01 bis 0,1 Mol/l Lösungsmittel.

Die Konzentration des Monomeren im Lösungsmittel beträgt hierbei im allgemeinen etwa um 0,1 Mol pro Liter Lösungsmittel. Sie kann aber auch in weiten Grenzen unterschritten bzw. überschritten werden. Zweckmäßig arbeitet man mit Konzentrationen von 0,01 bis 1 Mol Monomer pro Liter Lösungsmittel.

Als Elektrolytlösungsmittel besonders geeignet sind die für die anodische Oxidation der oben genannten heterocyclischen Verbindungen üblichen polaren organischen Lösungsmittel, die die Monomeren und das Leitsalz zu lösen vermögen. Das Lösungsmittel selbst soll möglichst aprotisch sein. Bevorzugt sind Alkohole, Ether, wie 1,2-Dimethoxyethan, Dioxantetrahydrofuran, Aceton, Acetonitril, Dimethylformamid oder Propylencarbonat.

Der mit leitfähigen Polymeren beschichtete andere Werkstoff wird dabei als Anode geschaltet. Die Kathode kann z.B. aus einem anderen Metall wie Platin, Molybdän, Wolfram oder aus Edelstahl, Nickel oder Titan bestehen.

Das mit Öffnung versehene Gefäß, das die Kathode enthält, ist zweckmäßig aus einem nichtleitenden Stoff hergestellt. Geeignet sind z.B. Kunststoffe wie Polytetrafluorethylen, Polypropylen, Polyethylen. Das Gefäß ist außerdem mit einer Öffnung versehen, die mit dem Umgebungsraum verbunden ist, so daß die Elektrolytlösung, die das Monomere enthält, aus der über die Oberfläche des anderen Werkstoffes geführten Öffnung austreten kann. Die Öffnung, die der Oberfläche zugekehrt ist, wird so ausgebildet, daß man die gewünschte Breite der aufzubringenden Schicht erhält. Das Gefäß wird nun über die Oberfläche derart geführt, daß die Öffnung nur die Stellen der Oberfläche berührt, an denen eine Schicht gewünscht ist.

Die Reaktionstemperatur bei der das Verfahren betrieben wird, hat sich als unkritisch erwiesen, so daß in einem breiten Bereich gearbeitet werden kann, solange die Erstarrungstemperatur bzw. die Siedetemperatur des Elektrolytlösungsmittels nicht unter- bzw. überschritten wird. Im allgemeinen hat sich als Reaktionstemperatur ein Bereich von −20 bis +40°C als vorteilhaft erwiesen, wobei man normalerweise bei Raumtemperatur (22 bis 24°C) arbeitet. Im übrigen können die bekannten, für Verfahren zum anodischen Oxidieren der Monomeren bekannten Elektrolysebedingungen eingehalten werden. Zweckmäßig liegt die Spannung, in der die elektrochemische Polymerisation betrieben wird, im Bereich von 1 bis 150 Volt, vorzugsweise im Bereich von 2 bis 20 Volt. Für die Stromdichte haben sich Werte von 0,5 bis 100 mA/cm², vorzugsweise von 0,1 bis 3,5 mA/cm², als vorteilhaft erwiesen. Im allgemeinen strebt man Dicken der aufgebrachten Schicht von leitfähigen Polymeren zwischen 10 und 100 µm an. Die erhaltenen beschichteten Metalle werden anschließend zum Entfernen anhaftender Lösungsmittel mit Lösungsmittel gewaschen und getrocknet. In den erfindungsgemäß hergestellten Verbundstoffen liegt das Polymere als Komplexkation des Polymeren mit dem Gegenanion des Leitsalzes vor. Die elektrische Leitfähigkeit des Polymeren liegt meist im Bereich von 10 bis $10^2$ S/cm.

Nach einer anderen besonderen Ausführungsform des Verfahrens wird der Behälter der eine Anode und eine Metallsalzlösung enthält über die Oberfläche eines anderen elektrisch leitfähigen Werkstoffes geführt, der Werkstoff wird als Kathode geschaltet und das Metall aus der Lösung kathodisch abgeschieden.

Die Elektrolytlösungen, aus denen die Metalle kathodisch abgeschieden werden, können im Prinzip jedes der kathodisch abscheidbaren Metalle enthalten. Vorzugsweise enthalten die Lösungen Salze von Metallen, die widerstandsfähige Überzüge auf den Oberflächen der Werkstoffe ergeben. Es ist aber auch möglich, an der Luft oxidierbare Metalle abzuscheiden, wenn dafür Sorge getragen ist, daß die Metallschicht nicht mit dem Sauerstoff der Luft in Berührung kommt. Solche Metalle können z.B. Alkalimetalle oder Erdalkalimetalle sein, wenn sie als Überzüge auf Kunststoffe z.B. auf elektrisch leitfähige Polymere aufgebracht werden, die z.B. als Elektroden Verwendung finden. Die Metallsalze sind in einem Elektrolytlösungsmittel gelöst. Hier kommen vorzugsweise Dioxan oder Tetrahydrofuran in Frage. Es eignen sich aber auch hochsiedende organische Lösungsmittel, wie Polyethylenoxid und/oder Polypropylenoxid, die endständig mit Methylgruppen verethert sind.

Besonders vorteilhaft sind Mischungen aus Wasser und mit Wasser mischbaren organischen Lösungsmitteln, die die Metallsalze lösen. Die Metallsalzlösungen enthalten vorteilhaft zwischen 0,01 und 3 mol/l des Metallsalzes.

In dem Behälter, in dem die Metallsalzlösung enthalten ist, ist außerdem eine Anode angeordnet, die mit der Lösung in Verbindung steht bzw. von der Lösung benetzt wird. Die Anode kann z.B. aus einem Metall wie Platin, Molybdän, Wolfram oder aus Edelstahl, Nickel oder Titan bestehen. Das mit Öffnung versehene Gefäß, das die Anode enthält, ist wie oben erwähnt, aus einem nichtleitenden Stoff hergestellt. Die Elektrolytlösung, die das Metallsalz enthält, tritt aus der über die Metalloberfläche geführten Öffnung aus. Die Öffnung, die der Werkstoffoberfläche zugekehrt ist, wird so ausgebildet, daß man die gewünschte Breite der aufzubringenden Schicht erhält. Das Gefäß wird nun über die Werkstoffoberfläche derart geführt, daß die Öffnung nur die Stellen der Oberfläche berührt, an denen eine Metallschicht gewünscht ist.

Die sonstigen Arbeitsweisen zur Ausübung des Verfahrens unterscheiden sich nicht von den Methoden der Galvanotechnik. Sie sind in den oben angegebenen Literaturstellen beschrieben und dem Fachmann bekannt.

Die Temperatur bei der das Verfahren betrieben wird, hat sich als unkritisch erwiesen, so daß in einem breiten Bereich gearbeitet werden kann, solange die Erstarrungstemperatur bzw. die Siedetemperatur des Elektrolytlösungsmittels nicht unter- bzw. überschritten wird. Im allgemeinen hat sich als Reaktionstemperatur ein Bereich von +5 bis +40°C als vorteilhaft erwiesen, wobei man normalerweise bei Raumtemperatur (22 bis 24°C) arbeitet. Im übrigen können die bekannten, für Verfahren zur kathodischen Abscheidung von Metallen bekannten Elektrolysebedingungen eingehalten werden. Zweckmäßig liegt die Spannung, in der die elektrochemische Abscheidung betrieben wird, im Bereich von 1 bis 150 Volt, vorzugsweise im Bereich von 2 bis 20 Volt. Für die Stromdichte haben sich Werte von 0,5 bis 100 mA/cm², vorzugsweise von 0,1 bis 3,5 mA/cm², als vorteilhaft erwiesen. Im allgemeinen strebt man Dicken der aufgebrachten Metallschicht auf dem leitfähigen Werkstoff zwischen 0,1 und 100 µm, vorzugsweise zwischen 1 und 10 µm an. Die erhaltenen beschichteten Werkstoffe werden anschließend zum Entfernen anhaftender Lösungsmittel gewaschen und getrocknet.

## Beispiel 1

Eine Automobilkarosserie aus Stahl wird als Anode geschaltet. An vorgegebenen Stellen der Oberfläche der Karosserie wird nun ein Behälter im Abstand von 0,5 cm vorbeigeführt, der die Elektrolytlösung und das Monomere enthält. Die Öffnung hat einen kreisförmigen Durchmesser von etwa 1 cm. Es wurde eine Stromdichte von 20 mAmp/cm² zwischen der Fläche der Anode und der Kathode eingehalten. Das Gefäß war mit einer Lösung von 0,01 Gew.-% Pyrrol und 0,01 Gew.-% des Tetrabutylammoniumsalzes der Phenylsulfonsäure in Acetonitril gefüllt. Die Öffnung des Gefäßes ist mit einem offenzelligen Polyethylenschaum gefüllt, der die Elektrolytlösung, die das Monomere enthält, benetzt, so daß die Benetzung der Metalloberfläche über diesen Polyethylenschaum erfolgt. Das bewegliche Kathoden-Gefäß wird nun über die Oberfläche der Karosserie geführt. Dabei stellte sich eine Polymerisationszeit pro cm² von jeweils 0,5 Minuten ein. Der Behälter wurde kontinuierlich in gerader Richtung geführt, so daß sich ein Streifen von 1 cm Breite aus Polypyrrol und 1,20 cm Länge auf der Oberfläche der Karosserie ausgebildet hat. Der Streifen des leitfähigen Polymeren hatte eine Dicke von 15 µ. Das Polymerisat haftet fest auf der Oberfläche.

## Beispiel 2

Es wird wie in Beispiel 1 gearbeitet, jedoch als Elektrolyt eine Mischung aus Acetonitril mit 10% Wasser verwendet. Als Leitsalz dient das Tributylammoniumsalz der Kupferphthalocyanintrisulfonsäure. Hierdurch wird eine besondere feste Haftung der Polypyrrolschicht auf der Metalloberfläche erreicht.

In gleicher Weise kann als Leitsalz das Tributylammoniumsalz der Anthrachinonsulfonsäure verwendet werden.

Beispiel 3

Es wird wie in Beispiel 1 gearbeitet, jedoch als Elektrolyt Propylencarbonat mit Tetrabutylammoniumperchlorat als Leitsalz verwendet.

Beispiel 4

Es wird wie in Beispiel 1 gearbeitet, jedoch als Elektrolyt Methylenchlorid mit Tributylammoniumtolylsulfonat als Leitsalz verwendet; zusätzlich enthält der Elektrolyt, bezogen auf das Methylenchlorid 2 Gew.-% Polyethersulfon.

Beispiel 5

Wie in Beispiel 1, jedoch wird als Elektrolyt Tetrahydrofuran mit Fe(ClO₄) als Leitsalz verwendet; zusätzlich enthält der Elektrolyt, bezogen auf das Tetrahydrofuran 1,5 Gew.-% Polyvinylchlorid; als Monomeres dient 3-Methylthiophen.

Beispiel 6

Ein Stahlgehäuse wird als Kathode geschaltet. An vorgegebenen Stellen der Oberfläche des Stahlgehäuses wird ein Behälter im Abstand von 0,5 cm vorbeigeführt, die Metallsalzlösung und die Anode enthält. Die Öffnung hat einen kreisförmigen Durchmesser von etwa 1 cm. Es wurde eine Stromdichte von 2 mA/cm² zwischen der Oberfläche des als Kathode geschalteten Gehäuses und der Anode im Behälter eingehalten. Das Gefäß war mit einer Lösung eines Gemisches aus Wasser und Polypropylenglykol im Verhältnis 1:1, das 0,01 Gew.-% Silbernitrat und 0,1 Gew.-% des Tetrabutylammoniumsalzes der Phenylsulfonsäure enthält, gefüllt. Die Öffnung des Gefäßes ist mit einem offenzelligen Polyethylenschaum ausgefüllt, der die Elektrolytlösung, die das Metallsalz enthält, hindurchläßt, so daß die Oberfläche des Metallgehäuses benetzt wird. Das bewegliche Gefäß, das die Anode enthält, wird nun über die Oberfläche des Stahlgehäuses geführt. Dabei stellt sich eine Abschaltungszeit pro cm² von jeweils 0,5 Min. ein. Der Behälter wurde kontinuierlich in gerader Richtung geführt, so daß sich ein Streifen von 0,2 cm Breite aus Silber und 1,2 cm Länge auf der Oberfläche des Gehäuses ausgebildet hat. Der Streifen des abgeschiedenen Silbers hat eine Dicke von 1,5 μ. Er haftet fest auf der Oberfläche des Stahlgehäuses.

Es wird wie in Beispiel 6 gearbeitet, jedoch ein Gehäuse aus dem leitfähigen Kunststoffpolypyrrol verwendet. Der Elektrolyt ist eine Mischung aus Acetonitril mit 10% Wasser. Die Lösung enthält als Leitsalz das Tributylammoniumsalz der Kupferphthalocyanintrisulfonsäure. Hierdurch wird eine besondere Haftung des Metalls auf der Polypyrrolschicht erreicht. Die Lösung enthielt außerdem Kobaltnitrat, wobei die Konzentration des Leitsalzes und des Metallsalzes, der im Beispiel 6 angegebenen entsprechen. Es wird eine feste Kobaltschicht auf dem Polypyrrol erhalten.

Es kann auch in gleicher Weise ohne Leitsalz gearbeitet werden.

Beispiel 7

Es wird wie in Beispiel 6 gearbeitet, jedoch als Elektrolyt Propylencarbonat und als Metallsalz Nickel-II-Perchlorat verwendet.

In gleicher Weise kann man als Elektrolyt eine wäßrige Polyvinylalkohollösung und Zinn-II-Chlorid als Metallsalz verwenden.

Es werden somit festhaftende Nickel- bzw. Zinn-Schichten auf der Stahloberfläche erhalten.

Beispiel 8

Es wird wie in Beispiel 7 gearbeitet, jedoch unter Argonschutzgas. Der Elektrolyt enthält Tetrahydrofuran und Kaliumperchlorat als Metallsalz. Es wird eine festhaftende Schicht von Kalium auf Polypyrrol erhalten.

In gleicher Weise kann an Stelle von Polypyrrol ein thermoplastischer Kunststoff verwendet werden, dessen Oberfläche leitfähig ausgerüstet ist.

**Patentansprüche**

1. Verfahren zum Aufbringen einer Schicht eines elektrisch leitfähigen Werkstoffs durch elektrochemische Abscheidung auf einen anderen elektrisch leitfähigen Werkstoff, in dem man einen Behälter, der mit einer Öffnung versehen ist und der eine Elektrode und eine Lösung enthält aus der durch elektrochemische Abscheidung ein elektrisch leitfähiger Werkstoff entsteht, über die Oberfläche des anderen elektrisch leitfähigen Werkstoffs führt, so daß die Lösung im Bereich der Öffnung mit der Oberfläche des anderen elektrisch leitfähigen Werkstoffs in Kontakt kommt, den anderen elektrisch leitfähigen Werkstoff mit der Gegenelektrode verbindet und den elektrisch leitfähigen Werkstoff aus der Lösung elektrochemisch auf der Oberfläche des anderen Werkstoffes abscheidet.

2. Verfahren nach Anspruch 1, dadurch gekennzeichnet, daß man einen Behälter, der eine Kathode und eine Lösung eines durch anodische Polymerisation polymerisierbaren Monomeren sowie eines Leitsalzes enthält, über die Oberfläche eines Metalles führt, das Metall als Anode schaltet und die Monomeren anodisch polymerisiert.

3. Verfahren nach Anspruch 2, dadurch gekennzeichnet, daß man als Monomere Verbindungen aus der Klasse der Pyrrole oder Thiophene verwendet.

4. Verfahren nach Anspruch 1, dadurch gekennzeichnet, daß man einen Behälter, der eine Anode und eine Metallsalzlösung enthält, über die Oberfläche eines elektrisch leitfähigen Werkstoffes führt, den Werkstoff als Kathode schaltet und das Metall kathodisch abscheidet.

**Claims**

1. A process for applying a layer of an electrically conductive material on top of another electrically conductive material by electrochemical deposition, wherein a vessel which is provided with an orifice and contains an electrode and a solution from which an electrically conductive material is formed by electrochemical deposition is passed over the surface of the other electrically conductive material, so that in the region of the orifice the soluition comes into contact with the surface of the other electrically conductive material, the other electrically conductive material is connected to the counterelectrode and the electrically conductive material is deposited electrochemically from the solution on the surface of the other material.

2. A process as claimed in claim 1, wherein a vessel which contains a cathode and a solution of an anodically polymerizable monomer as well as of a conductive salt is passed over the surface of a metal, the metal is wired as the anode and the monomer is subjected to anodic polymerization.

3. A process as claimed in claim 2, wherein compounds of the class of the pyrroles or thiophenes are used as monomers.

4. A process as claimed in claim 1, wherein a vessel which contains an anode and a metal salt solution is passed over the surface of an electrically conductive material, the material is wired as the cathode and the metal is cathodically deposited.

**Revendications**

1. Procédé pour appliquer une couche d'un matériau conducteur de l'électricité par dépôt électrochimique sur un autre matériau conducteur de l'électricité, dans lequel un réservoir pourvu d'une ouverture et d'une électrode et contenant une solution capable de former par dépôt électrochimique un matériau conducteur de l'électricité est promené au-dessus de la surface de l'autre matériau conducteur de l'électricité de telle façon que, dans la région de son ouverture, la solution vient en contact avec la surface de l'autre matériau conducteur de l'électricité, puis cet autre matériau conducteur de l'électricité est relié à la contre-électrode et le matériau conducteur de l'électricité est déposé par voie électrochimique de la solution sur la surface de l'autre matériau.

2. Procédé suivant la revendication 1, caractérisé en ce qu'un réservoir pourvu d'une cathode et contenant une solution d'un monomère polymérisable par polymérisation anodique et d'un sel conducteur est promené au-dessus de la surface d'un métal, qui sert d'anode pour la polymérisation anodique des monomères.

3. Procédé suivant la revendication 2, caractérisé en ce que les monomères sont choisis dans la classe des pyrroles et des thiophènes.

4. Procédé suivant la revendication 1, caractérisé en ce qu'un réservoir pourvu d'une anode et contenant une solution d'un sel de métal est promené au-dessus de la surface d'un matériau conducteur de l'électricité, qui sert de cathode pour le dépôt cathodique du métal.